# EUROPEAN PATENT SPECIFICATION

(11) **EP 3 637 227 B1**
(45) Date of publication and mention of the grant of the patent: **12.04.2023**
(21) Application number: 19192469.5
(22) Date of filing: 20.05.2014
(51) Int. Cl.: G06F 3/01, H04B 5/00

(54) **METHOD FOR PERFORMING OPERATION ON INTELLIGENT WEARING DEVICE BY USING GESTURE, AND INTELLIGENT WEARING DEVICE**
VERFAHREN ZUR DURCHFÜHRUNG EINER OPERATION AUF EINER INTELLIGENTEN TRAGEVORRICHTUNG DURCH GESTEN SOWIE INTELLIGENTE TRAGEVORRICHTUNG
PROCÉDÉ POUR EFFECTUER UNE OPÉRATION SUR UN DISPOSITIF VESTIMENTAIRE INTELLIGENT À L'AIDE DE GESTES ET DISPOSITIF VESTIMENTAIRE INTELLIGENT

(43) Date of publication of application: 15.04.2020
(62) Divisional of application: 14892371.7
(73) Proprietor: Huawei Technologies Co., Ltd., Shenzhen, Guangdong 518129 (CN)
(72) Inventor: YANG, Xuqiao, Shenzhen, Guangdong 518129 (CN); CHEN, Xi, Shenzhen, Guangdong 518129 (CN)
(74) Representative: Goddar, Heinz J.

(56) References cited:
- WO-A1-2014/052895
- US-A1- 2002 115 478
- US-A1- 2013 191 741

## Description

### TECHNICAL FIELD

The present invention relates to an operation technology for an intelligent wearing device, and in particular, to a method for performing an operation on an intelligent wearing device by using a gesture, and an intelligent wearing device.

### BACKGROUND

With development of intelligent wearing devices, the intelligent wearing devices, particularly represented by a smart band and an intelligent wristwatch, start to gain popularity in every aspect of life. When an intelligent wearing device is used, a message transferred by a mobile phone, including information such as a phone call, a short messaging service message, or wake-up, may be acquired by using the intelligent wearing device. A user pushes a message by performing an operation on a surface of the intelligent wearing device, to implement interaction with the mobile phone.

With development of technologies, there are increasing applications for intelligent wearing. Although an application (Application, APP for short) vendor performs APP adaptation exclusively for a mobile wearing device, to optimize operation experience, because a screen that is of a general intelligent wearing device and is used for a user operation is relatively small, it is difficult for a user to accurately perform an operation on the intelligent wearing device by using a finger on such a small screen.
US 2002/115478 A1 discloses that, when there is an incoming call to a mobile telephone, it sends an incoming call notification signal to a watch-shaped information processing device. When the watch-shaped information processing device receives the incoming call notification signal, it notifies its user of the incoming call. The watch-shaped information processing device can also sends user's instructions to the mobile telephone. The instructions cause the mobile telephone to conduct processing for incoming call such as processing for asking the caller to wait, or asking the caller to leave a message.
US 2013/191741 A1 discloses an electronic device, which can be a wearable electronic device, tablet electronic device, or other type of device, and includes a user interface operable to detect gesture input. A visible output, which can be proximately disposed with the user interface, provides visible feedback with which a user can determine that the input was received. A control circuit is operable in some embodiments to control the output of the visible output to mimic the gesture input. Audible feedback and tactile feedback can be used in addition to the visible feedback.

### SUMMARY

The present invention is set out in the independent claims whereas preferred embodiments and further implementations are outlined in the dependent claims, description and figures.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a method for performing an operation on an intelligent wearing device by using a gesture according to an embodiment of the present invention;
FIG. 2 is a reflected signal of an operation gesture of momentarily passing over a screen of an intelligent wearing device;
FIG. 3 is a reflected signal of an operation gesture of ephemerally hovering over a screen of an intelligent wearing device;
FIG. 4 is an infra-red signal of an operation gesture of momentarily passing over a screen of an intelligent wearing device;
FIG. 5 is an infra-red signal of an operation gesture of ephemerally hovering over a screen of an intelligent wearing device;
FIG. 6 is a schematic structural diagram of an intelligent wearing device according to an embodiment of the present invention;
FIG. 7 is a schematic structural diagram of an intelligent wearing device according to another embodiment of the present invention;
FIG. 8 is a schematic structural diagram of an intelligent wearing device according to still another embodiment of the present invention; and
FIG. 9 is a schematic structural diagram of an intelligent wearing device according to yet another embodiment of the present invention.

### DETAILED DESCRIPTION OF THE EMBODIMENTS

The invention is defined by the appended claims.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

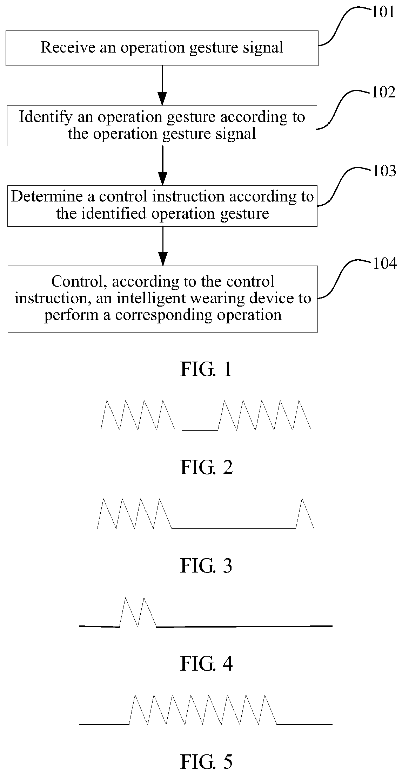

FIG. 1 is a flowchart of a method for performing an operation on an intelligent wearing device by using a gesture according to an embodiment of the present invention. As shown in FIG. 1, the method includes:
Step 101: Receive an operation gesture signal.

Optionally, in an embodiment of the present invention, the intelligent wearing device has a capability of transmitting an infra-red signal. Before the intelligent wearing device receives the operation gesture signal, an infra-red transmitter in the intelligent wearing device transmits an infra-red signal, where the infra-red transmitter may be an infra-red light emitting diode (Infra-Red Light Emitting Diode, IR LED for short). After shielding a screen of the intelligent wearing device, an operation gesture of a user reflects the infra-red signal transmitted by the intelligent wearing device, which may be specifically that the operation gesture of the user reflects the infra-red signal transmitted by the IR LED. Then, the intelligent wearing device receives a reflected signal of the infra-red signal, which may be specifically that a proximity sensor (Proximity Sensor, Prox Sensor for short) in the intelligent wearing device receives the reflected signal that is of the infra-red signal and is transmitted by the IR LED, where the reflected signal of the infra-red signal is the operation gesture signal.

Optionally, in another embodiment of the present invention, the intelligent wearing device has a capability of sensing an external infra-red signal. That the intelligent wearing device receives the operation gesture signal is specifically as follows: When the operation gesture of the user shields the screen of the intelligent wearing device, an infra-red sensing component in the intelligent wearing device may sense an infra-red signal transmitted by the operation gesture, thereby acquiring the infra-red signal transmitted by the operation gesture of the user, where the infra-red signal transmitted by the operation gesture of the user is the operation gesture signal.

Step 102: Identify an operation gesture according to the operation gesture signal.

Optionally, in an embodiment of the present invention, the operation gesture signal is a reflected signal reflected by the operation gesture to the infra-red signal transmitted by the intelligent wearing device due to shielding of the screen of the intelligent wearing device by the operation gesture of the user.

Specifically, after receiving the reflected signal of the infra-red signal, the intelligent wearing device first converts the received reflected signal into a digital signal. Reflected signals reflected by different operation gestures to the infra-red signal are different; therefore, digital signals obtained by converting the different reflected signals are also different. For example, FIG. 2 shows a reflected signal of an operation gesture of momentarily passing over a screen of an intelligent wearing device, and FIG. 3 shows a reflected signal of an operation gesture of ephemerally hovering over a screen of an intelligent wearing device. When the operation gesture is momentarily passing over the screen of the intelligent wearing device, in this case, hover time of the operation gesture is quite short compared with that of the operation gesture of ephemerally hovering over the screen of the intelligent wearing device. In this case, a reflected value that is of the infra-red signal and is generated by the operation gesture is smaller; therefore, time for which a reflected signal is located at a valley in a waveform of the reflected signal is shorter.

Optionally, in another embodiment of the present invention, the operation gesture signal is the infra-red signal transmitted by the operation gesture of the user.

Specifically, after the intelligent wearing device receives the sensed infra-red signal transmitted by the operation gesture of the user, infra-red signals transmitted by different operation gestures are different; therefore, the infra-red signals received by the intelligent wearing device are also different. For example, FIG. 4 shows an infra-red signal of an operation gesture of momentarily passing over a screen of an intelligent wearing device, and FIG. 5 shows an infra-red signal of an operation gesture of ephemerally hovering over a screen of an intelligent wearing device. When the operation gesture is momentarily passing over the screen of the intelligent wearing device, in this case, hover time of the operation gesture is quite short compared with that of the operation gesture of ephemerally hovering over the screen of the intelligent wearing device. In this case, a value that is of the infra-red signal and is generated by the operation gesture is smaller; therefore, time for which the infra-red signal is located at a crest in a waveform of the infra-red signal is shorter.

The operation gesture may be specifically momentarily passing over the screen of the intelligent wearing device, ephemerally hovering over the screen of the intelligent wearing device, or the like, where the operation gesture is not limited in the present invention.

Further, the intelligent wearing device converts the operation gesture signal into a digital signal that can be processed by the intelligent wearing device, determines whether the digital signal after conversion is a preset digital signal in the intelligent wearing device, and if the digital signal after conversion is the preset digital signal, the operation gesture of the user can be identified according to the preset digital signal.

The preset digital signal is a digital signal that is corresponding to the operation gesture of the user and that is prestored in the intelligent wearing device in advance.

For example, Table 1 shows a correspondence between a preset digital signal in an intelligent wearing device and an operation gesture.

**Table 1: Table of a correspondence between a preset digital signal in an intelligent wearing device and an operation gesture**

| **Preset digital signal** | **Operation gesture** |
|---|---|
| 111111110011111111 | Momentarily pass over a screen of an intelligent wearing device |
| 111100000000001111 | Hover over a screen of an intelligent wearing device for three seconds |

It is assumed that the intelligent wearing device has a function of transmitting an infra-red signal. When an operation gesture of a user is momentarily passing over the screen of the intelligent wearing device, the intelligent wearing device receives a reflected signal that is of an infra-red signal and is reflected due to shielding of the screen of the intelligent wearing device by the operation gesture of the user, and converts the reflected signal of the infra-red signal into a digital signal, where the digital signal after conversion is 111111110011111111. The intelligent wearing device matches the digital signal obtained after conversion with a preset digital signal, and determines, according to the table of the correspondence between a preset digital signal and an operation gesture, that the operation gesture of the user is momentarily passing over the screen of the intelligent wearing device.

Further, it may be specifically that an infra-red signal is converted into a digital signal by using an analog to digital converter (Analog to Digital Converter, ADC for short).

Step 103: Determine a control instruction according to the identified operation gesture.

Optionally, a preset control instruction corresponding to the operation gesture is determined according to the identified operation gesture, where the control instruction is used to control the intelligent wearing device to perform a corresponding operation.

Step 104: Control, according to the control instruction, the intelligent wearing device to perform a corresponding operation.

Specifically, according to the matched preset digital signal, the operation gesture of the user is identified, and the control instruction corresponding to the identified operation gesture of the user is determined, where the control instruction is used to control the intelligent wearing device to perform the corresponding operation. For example, when the intelligent wearing device needs to perform an operation of answering or hanging up a call, when the operation gesture of the user is momentarily passing over the intelligent wearing device, the operation of answering a call is performed, and when the operation gesture of the user is ephemerally hovering over the intelligent wearing device, the operation of hanging up a call is performed, where time for hovering over the intelligent wearing device may be set according to a user preference, the control instruction is not limited to answering a call or hanging up a call, and a control instruction may also be increased according to a user requirement.

Further, the control instruction is prestored in the intelligent wearing device in advance and is corresponding to the operation gesture.

Controlling the intelligent wearing device to perform the corresponding operation may be specifically answering a call, hanging up a call, switching a clock, switching a calendar, performing an operation on a mobile phone application, or the like, which is not limited in the present invention.

For example, the following table shows a correspondence of a preset digital signal in an intelligent wearing device, an operation gesture, and a control instruction.

| **Preset digital signal** | **Operation gesture** | **Control instruction** |
|---|---|---|
| 111111110011111111 | Momentarily pass over a screen of an intelligent wearing device | Answer a call |
| 111100000000001111 | Hover over a screen of an intelligent | Hang up a call |
| | wearing device for three seconds | |

It is assumed that the intelligent wearing device needs to perform an operation of hanging up a call, and the intelligent wearing device has a capability of transmitting an infra-red signal. Specifically, after a mobile terminal of a user has an incoming call, the mobile terminal activates the intelligent wearing device by using Bluetooth, and after the intelligent wearing device receives an activation signal, the screen of the intelligent wearing device is lighted up and an incoming call interface is displayed on the screen of the intelligent wearing device. Meanwhile, a Prox Sensor and an IR LED in the intelligent wearing device are also activated, and the IR LED autonomously transmits an infra-red signal. When the operation gesture of the user is hovering over the screen of the intelligent wearing device for three seconds, in this case, the Prox Sensor receives a reflected signal reflected by the operation gesture of the user to the infra-red signal due to shielding of the screen of the intelligent wearing device by the operation gesture of the user, and the intelligent wearing device converts the received reflected signal of the infra-red signal into a digital signal, where the digital signal obtained by converting the reflected signal of the infra-red signal is 111100000000001111. The intelligent wearing device matches the digital signal obtained after conversion with a preset digital signal, determines, according to the correspondence between a preset digital signal and an operation gesture, that the operation gesture of the user is hovering over the screen of the intelligent wearing device for three seconds, and outputs, according to the determined operation gesture of the user, a control instruction corresponding to the operation gesture of the user, that is, performs an operation of hanging up a call.

Optionally, when the intelligent wearing device is configured to perform a corresponding operation of the mobile terminal, before the intelligent wearing device transmits an infra-red signal or senses an infra-red signal, the activation signal sent by the mobile terminal may further be received by using Bluetooth.

The activation signal may be used to activate the intelligent wearing device to display an operation that needs to be performed by the mobile terminal.

After receiving, by using Bluetooth, the activation signal sent by the mobile terminal, the intelligent wearing device may further display an operation interface on the screen.

Specifically, in an embodiment of the present invention, the intelligent wearing device may be activated in an event triggering manner, that is, when the mobile terminal needs to perform an operation, the mobile terminal transmits the activation signal to the intelligent wearing device by using Bluetooth. Specifically, the activation signal may be used to activate the intelligent wearing device, so as to light up the screen of the intelligent wearing device and display the operation interface on the screen of the intelligent wearing device.

In another embodiment of the present invention, the intelligent wearing device may be activated according to a time period preset by the mobile terminal. For example, when the mobile terminal presets a period for activating the intelligent wearing device to five minutes, in this case, regardless of whether the mobile terminal needs to perform an operation within the period, the mobile terminal transmits, within each period, an activation signal to the mobile terminal by using Bluetooth. When the mobile terminal does not need to perform an operation, the activation signal may be used to activate the intelligent wearing device, so as to light up the screen of the intelligent wearing device; when the mobile terminal needs to perform an operation, the activation signal may be used to activate the intelligent wearing device, so as to light up the screen of the intelligent wearing device and display the operation interface on the screen of the intelligent wearing device. A manner used to activate the intelligent wearing device is not limited to the two types, where the manner of activating the intelligent wearing device is not limited in the present invention.

According to the method for performing an operation on an intelligent wearing device by using a gesture provided in this embodiment of the present invention, first, an operation gesture is identified according to an operation gesture signal; then, a control instruction is determined according to the identified operation gesture; and finally, the intelligent wearing device is controlled, according to the control instruction, to perform a corresponding operation. The intelligent wearing device is controlled, according to an operation gesture of a user, to perform a corresponding operation, which ensures accuracy of performing, by the user, the operation on the intelligent wearing device.

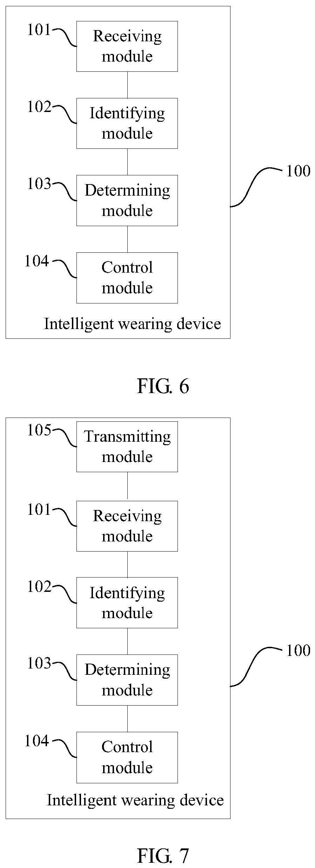

FIG. 6 is a schematic structural diagram of an intelligent wearing device according to an embodiment of the present invention. As shown in FIG. 6, the intelligent wearing device 100 includes a receiving module 101, an identifying module 102, a determining module 103, and a control module 104.

The receiving module 101 is configured to receive an operation gesture signal.

The identifying module 102 is configured to identify an operation gesture according to the operation gesture signal received by the receiving module 101.

The determining module 103 is configured to determine a control instruction according to the operation gesture identified by the identifying module 102.

The control module 104 is configured to control, according to the control instruction determined by the determining module 103, the intelligent wearing device to perform a corresponding operation.

In addition, as shown in FIG. 7, for the intelligent wearing device 100, the intelligent wearing device 100 may further include a transmitting module 105, configured to: before the receiving module 101 receives the operation gesture signal, transmit an infra-red signal.

Further, the receiving module 101 is specifically configured to:
receive a reflected signal reflected by the operation gesture to the infra-red signal.

Optionally, the receiving module 101 is specifically configured to:
receive an infra-red signal transmitted by the operation gesture.

Further, the identifying module 102 is specifically configured to:
perform, by the identifying module 102, analog-to-digital conversion on the operation gesture signal to obtain a digital signal;
determine, by the identifying module 102, whether the digital signal is a preset digital signal; and
if the digital signal is the preset digital signal, determine, by the identifying module 102, the operation gesture according to the preset digital signal.

The intelligent wearing device 100 provided in this embodiment may be configured to execute the technical solution in the method embodiment shown in FIG. 1. Implementation principles and technical effects of the intelligent wearing device 100 are similar, and details are not described again.

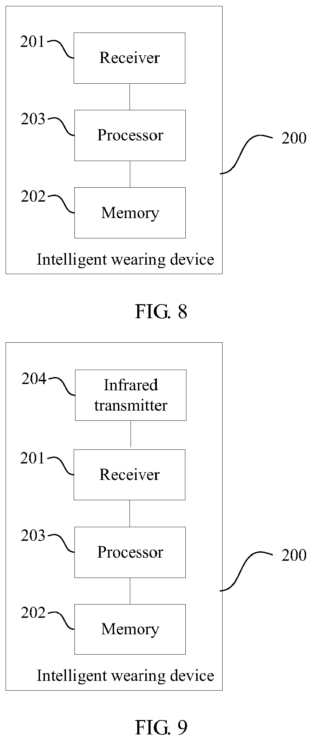

FIG. 8 is a schematic structural diagram of an intelligent wearing device according to still another embodiment of the present invention. As shown in FIG. 8, the intelligent wearing device 200 includes a receiver 201, a memory 202, and a processor 203.

The receiver 201 is configured to receive an operation gesture signal.

The memory 202 is configured to prestore a correspondence of a digital signal, an operation gesture, and a control instruction.

The processor 203 is configured to identify an operation gesture according to the operation gesture signal.

The processor 203 is further configured to determine, according to the correspondence stored in the memory 202, a control instruction corresponding to the identified operation gesture.

The processor 203 is further configured to control, according to the determined control instruction, the intelligent wearing device to perform a corresponding operation.

In addition, as shown in FIG. 9, for the intelligent wearing device 200, the intelligent wearing device 200 may further include:
an infra-red transmitter 204, configured to: before the receiver 201 receives the operation gesture signal, transmit an infra-red signal.

The receiver 201 is specifically configured to:
receive a reflected signal reflected by the operation gesture to the infra-red signal.

Optionally, the receiver 201 is specifically configured to:
receive an infra-red signal transmitted by the operation gesture.

Further, that the processor 203 is configured to identify an operation gesture according to the operation gesture signal includes:
performing, by the processor 203, analog-to-digital conversion on the operation gesture signal to obtain a digital signal;
determining, by the processor 203 according to the correspondence stored in the memory 202, whether the digital signal is a preset digital signal; and
if the digital signal is the preset digital signal, determining, by the processor 203, the operation gesture according to the preset digital signal.

The intelligent wearing device 200 provided in this embodiment may be configured to execute the technical solution in the method embodiment shown in FIG. 1. Implementation principles and technical effects of the intelligent wearing device 200 are similar, and details are not described again.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The storage medium includes any medium that can store program code, such as a ROM, a RAM, a magnetic disk, or an optical disc.

## Claims

1. A system comprising:
an intelligent wearable device comprising a sensor; and
a mobile terminal in communication with the intelligent wearable device and configured to send an activation signal to the intelligent wearable device when receiving an incoming call,
wherein the intelligent wearable device is configured to:
receive the activation signal from the mobile terminal via Bluetooth;
activate the sensor in response to receiving the activation signal;
detect a gesture by a user using the sensor; and
perform an operation according to the gesture.

2. The system of claim 1, wherein the activation signal indicates the incoming call of the mobile terminal.

3. The system of claim 1 or 2, wherein the intelligent wearable device further comprises a screen, and wherein after receiving the activation signal, the intelligent wearable device is further configured to:
light up the screen; and
display an interface for indicating the incoming call.

4. The system of any one of claims 1-3, wherein the gesture comprises the user hovering over a screen of the intelligent wearable device for three seconds.

5. The system of any one of claims 1-3, wherein the gesture comprises the user hovering his or her hand over the intelligent wearable device for a predefined time period.

6. The system of any one of claims 1-5, wherein the intelligent wearable device further comprises an infrared light emitting diode, and wherein after receiving the activation signal, the intelligent wearable device further configured to:
activate the infrared light emitting diode.

7. A controlling method, comprising
receiving, by an intelligent wearable device, an activation signal from a mobile terminal via Bluetooth;
activating a sensor in the intelligent wearable device in response to receiving the activation signal;
detecting, by the intelligent wearable device, a user gesture using the sensor; performing, by the intelligent wearable device, an operation according to the user gesture.

8. The method of claim 7, wherein the activation signal indicates an incoming call received by the mobile terminal.

9. The method of claim 7 or 8, wherein the user gesture comprises a user hovering his or her hand over the intelligent wearable device for a predefined time period.

10. The method of any one of claims 7-9, wherein the method further comprising:
lighting up the screen; and
displaying an interface for indicating the incoming call.

11. An intelligent wearable device, comprising:
a screen;
a receiver (201) configured to receive an activation signal from a mobile terminal;
a sensor configured to detect a gesture of a user; and
a processor (203) coupled to the screen, the receiver (201), and the sensor,
wherein the processor (203) is configured to:
activate the sensor in response to receiving the activation signal; and
perform an operation according to the gesture.

12. The intelligent wearable device of claim 11, wherein the activation signal indicates an incoming call was received by the mobile terminal.

13. The intelligent wearable device of claim 11 or 12, wherein the gesture comprises the user hovering his or her hand over the intelligent wearable device for a predefined time period.

14. The intelligent wearable device of any one of claims 11-13, wherein the processor (203) is further configured to:
light up the screen; and display, on the screen, an interface for indicating an incoming call.

15. The intelligent wearable device of any one of claims 11-14, wherein the processor (203) is further configured to:
activate the infrared light emitting diode.

## Patentansprüche

1. System, umfassend:
eine intelligente tragbare Vorrichtung, umfassend einen Sensor; und
ein mobiles Endgerät in Kommunikation mit der intelligenten tragbaren Vorrichtung und konfiguriert, um ein Aktivierungssignal an die intelligente tragbare Vorrichtung zu senden, wenn ein eingehender Anruf empfangen wird,
wobei die intelligente tragbare Vorrichtung konfiguriert ist zum:
Empfangen des Aktivierungssignals vom mobilen Endgerät über Bluetooth;
Aktivieren des Sensors in Reaktion auf das Empfangen des Aktivierungssignals;
Detektieren einer Geste durch einen Benutzer unter Verwendung des Sensors und
Durchführen einer Operation gemäß der Geste.

2. System nach Anspruch 1, wobei das Aktivierungssignal den eingehenden Anruf des mobilen Endgeräts angibt.

3. System nach Anspruch 1 oder 2, wobei die intelligente tragbare Vorrichtung ferner einen Bildschirm umfasst und wobei, nach dem Empfangen des Aktivierungssignals, die intelligente tragbare Vorrichtung ferner konfiguriert ist zum:
Beleuchten des Bildschirms und
Anzeigen einer Schnittstelle zum Angeben des eingehenden Anrufs.

4. System nach einem der Ansprüche 1-3, wobei die Geste umfasst, dass der Benutzer drei Sekunden lang eine Bewegung über einen Bildschirm der intelligenten tragbaren Vorrichtung ausführt.

5. System nach einem der Ansprüche 1-3, wobei die Geste umfasst, dass der Benutzer für einen vordefinierten Zeitraum seine oder ihre Hand über die intelligente tragbare Vorrichtung bewegt.

6. System nach einem der Ansprüche 1-5, wobei die intelligente tragbare Vorrichtung ferner eine Infrarotleuchtdiode umfasst und wobei, nach dem Empfangen des Aktivierungssignals, die intelligente tragbare Vorrichtung ferner konfiguriert ist zum: Aktivieren der Infrarotleuchtdiode.

7. Steuerverfahren, umfassend
Empfangen, durch eine intelligente tragbare Vorrichtung, eines Aktivierungssignals von einem mobilen Endgerät über Bluetooth;
Aktivieren eines Sensors in der intelligenten tragbaren Vorrichtung in Reaktion auf das Empfangen des Aktivierungssignals;
Detektieren, durch die intelligente tragbare Vorrichtung, einer Benutzergeste unter Verwendung des Sensors;
Durchführen, durch die intelligente tragbare Vorrichtung, einer Operation gemäß der Benutzergeste.

8. Verfahren nach Anspruch 7, wobei das Aktivierungssignal einen eingehenden Anruf, der durch das mobile Endgerät empfangen wird, angibt.

9. Verfahren nach Anspruch 7 oder 8, wobei die Benutzergeste umfasst, dass ein Benutzer für einen vordefinierten Zeitraum seine oder ihre Hand über die intelligente tragbare Vorrichtung bewegt.

10. Verfahren nach einem der Ansprüche 7-9, wobei das Verfahren ferner umfasst:
Beleuchten des Bildschirms und
Anzeigen einer Schnittstelle zum Angeben des eingehenden Anrufs.

11. Intelligente tragbare Vorrichtung, umfassend:
einen Bildschirm;
einen Empfänger (201), der konfiguriert ist, um ein Aktivierungssignal von einem mobilen Endgerät zu empfangen;
einen Sensor, der konfiguriert ist, um eine Geste eines Benutzers zu detektieren; und
einen Prozessor (203), der an den Bildschirm, den Empfänger (201) und den Sensor gekoppelt ist, wobei der Prozessor (203) konfiguriert ist zum:
Aktivieren des Sensors in Reaktion auf das Empfangen des Aktivierungssignals und
Durchführen einer Operation gemäß der Geste.

12. Intelligente tragbare Vorrichtung nach Anspruch 11, wobei das Aktivierungssignal angibt, dass ein eingehender Anruf durch das mobile Endgerät empfangen wurde.

13. Intelligente tragbare Vorrichtung nach Anspruch 11 oder 12, wobei die Geste umfasst, dass der Benutzer für einen vordefinierten Zeitraum seine oder ihre Hand über die intelligente tragbare Vorrichtung bewegt.

14. Intelligente tragbare Vorrichtung nach einem der Ansprüche 11-13, wobei der Prozessor (203) ferner konfiguriert ist zum:
Beleuchten des Bildschirms und Anzeigen, auf dem Bildschirm, einer Schnittstelle zum Angeben eines eingehenden Anrufs.

15. Intelligente tragbare Vorrichtung nach einem der Ansprüche 11-14, wobei der Prozessor (203) ferner konfiguriert ist zum:
Aktivieren der Infrarotleuchtdiode.

## Revendications

1. Système comprenant :
un dispositif vestimentaire intelligent comprenant un capteur ; et
un terminal mobile en communication avec le dispositif vestimentaire intelligent et configuré pour envoyer un signal d'activation au dispositif vestimentaire intelligent lors de la réception d'un appel entrant,
dans lequel le dispositif vestimentaire intelligent est configuré pour :
recevoir le signal d'activation depuis le terminal mobile via Bluetooth ;
activer le capteur en réponse à la réception du signal d'activation ;
détecter un geste par un utilisateur au moyen du capteur ; et
exécuter une opération en fonction du geste.

2. Système selon la revendication 1, dans lequel le signal d'activation indique l'appel entrant du terminal mobile.

3. Système selon la revendication 1 ou 2, dans lequel le dispositif vestimentaire intelligent comprend en outre un écran, et dans lequel après la réception du signal d'activation, le dispositif vestimentaire intelligent est en outre configuré pour :
éclairer l'écran ; et
afficher une interface pour indiquer l'appel entrant.

4. Système selon l'une quelconque des revendications 1 à 3, dans lequel le geste comprend le survol par l'utilisateur d'un écran du dispositif vestimentaire intelligent pendant trois secondes.

5. Système selon l'une quelconque des revendications 1 à 3, dans lequel le geste comprend le survol par la main de l'utilisateur du dispositif vestimentaire intelligent pendant une durée prédéfinie.

6. Système selon l'une quelconque des revendications 1 à 5, dans lequel le dispositif vestimentaire intelligent comprend en outre une diode émettrice de lumière infrarouge, et dans lequel après la réception du signal d'activation, le dispositif vestimentaire intelligent est en outre configuré pour :
activer la diode émettrice de lumière infrarouge.

7. Procédé de commande, comprenant :
la réception, par un dispositif vestimentaire intelligent, d'un signal d'activation depuis un terminal mobile via Bluetooth ;
l'activation d'un capteur dans le dispositif vestimentaire intelligent en réponse à la réception du signal d'activation ;
la détection, par le dispositif vestimentaire intelligent, d'un geste d'utilisateur au moyen du capteur ;
l'exécution, par le dispositif vestimentaire intelligent, d'une opération en fonction du geste d'utilisateur.

8. Procédé selon la revendication 7, dans lequel le signal d'activation indique un appel entrant reçu par le terminal mobile.

9. Procédé selon la revendication 7 ou 8, dans lequel le geste d'utilisateur comprend un survol par la main de l'utilisateur du dispositif vestimentaire intelligent pendant une durée prédéfinie.

10. Procédé selon l'une quelconque des revendications 7 à 9, le procédé comprenant en outre :
l'éclairage de l'écran ; et
l'affichage d'une interface pour indiquer l'appel entrant.

11. Dispositif vestimentaire intelligent, comprenant :
un écran ;
un récepteur (201) configuré pour recevoir un signal d'activation depuis un terminal mobile ;
un capteur configuré pour détecter un geste d'un utilisateur ; et
un processeur (203) couplé à l'écran, au récepteur (201) et au capteur, dans lequel le processeur (203) est configuré pour :
activer le capteur en réponse à la réception du signal d'activation ; et
exécuter une opération en fonction du geste.

12. Dispositif vestimentaire intelligent selon la revendication 11, dans lequel le signal d'activation indique qu'un appel entrant a été reçu par le terminal mobile.

13. Dispositif vestimentaire intelligent selon la revendication 11 ou 12, dans lequel le geste comprend le survol par la main de l'utilisateur du dispositif vestimentaire intelligent pendant une durée prédéfinie.

14. Dispositif vestimentaire intelligent selon l'une quelconque des revendications 11 à 13, dans lequel le processeur (203) est en outre configuré pour :
éclairer l'écran ; et afficher, sur l'écran, une interface pour indiquer un appel entrant.

15. Dispositif vestimentaire intelligent selon l'une quelconque des revendications 11 à 14, dans lequel le processeur (203) est en outre configuré pour :
activer la diode émettrice de lumière infrarouge.
